# EUROPEAN PATENT SPECIFICATION

(11) **EP 3 835 177 B1**
(45) Date of publication and mention of the grant of the patent: **27.04.2022**
(21) Application number: 20183190.6
(22) Date of filing: 30.06.2020
(51) Int. Cl.: B62D 13/04, B62D 7/14

(54) **STEERING AXLE FOR A TRAILER TOWED BY A TRACTOR**
LENKACHSE FÜR EINEN VON EINER ZUGMASCHINE GEZOGENEN ANHÄNGER
ESSIEU DE DIRECTION POUR UNE REMORQUE TRACTÉE PAR UN TRACTEUR

(30) Priority: 09.12.2019 IT 201900023409
(43) Date of publication of application: 16.06.2021
(73) Proprietor: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(56) References cited:
- EP-A1- 2 272 736
- WO-A1-2014/179858
- CN-A- 109 139 603
- IT-A1-201800 003 510

## Description

The present invention relates to a steering axle for a trailer towed by a tractor. As is known, current steering axles for trailers that are towed by a tractor normally comprise a steering device adapted to control the articulated arms of the steering axle which in turn determine the partial rotation of the hubs and therefore of the wheels of the trailer.

According to the user's requirements, different steering devices are made in order to be able to obtain different functions.

For example, a first steering device of current steering axles is made so as to be able to have only two mutually combined functions: the active steering function is performed by one piston whilst the locked steering function is performed by another piston.

In order to have a combination of different functions such as for example the function of active steering or the function of free steering or the function of steering locked on the centre, until today a single but extremely complex steering device could be used.

As further example, the patent application IT201800003510A1 discloses a steering axle for a towed trailer according to the preamble of claim 1.

In substance, the considerable problem posed both to the axle and trailer manufacturers and to the user thereof lies in the fact that, according to requirements, an axle must be made with a particular steering device.

This situation means for the trailer manufacturer purchasing different axles of different types in order to satisfy the customer's requests and, for the axle manufacturer, having to have different types of axles in stock in order to satisfy market requirements, or having the different types of cylinder in the warehouse or as different types of spare part, with the trailer manufacturer who has to replace the cylinder during manufacture or set up the trailer according to the requirements of the end customer.

These drawbacks imply an increase in production and storage costs as well as spare parts and after-sales service.

The task of the present invention is to eliminate the aforementioned drawbacks of the prior art.

Within this technical task, one object of the invention is to make a steering axle for a trailer towed by a tractor that enables a multiplicity of functions to be performed, in particular at least the function of free steering, the function of restoring and locking the alignment of the axle on the centre, in which the wheels are oriented orthogonally to the geometric axis of the axle, the active steering function and the function of assisting realignment of the axle in the centre.

It is a further object of the invention to provide a steering axle for a trailer towed by a tractor that, while performing a multiplicity of functions, has a simplified construction and extremely contained overall dimensions and a weight that does not affect the functional and technical characteristics of the trailer.

It is yet another object of the invention to make a steering axle for a trailer towed by a tractor that fulfils the requirements of the market and of the axle manufacturer without having to have different types of axles and components thereof in stock.

It is yet another object of the invention to provide a steering axle for a trailer towed by a tractor that has a multiplicity of functions without an increase in production and storage costs or spare parts and after-sales service.

It is another object of the invention to make a steering axle with a single cylinder that can satisfy the requests of the end customer without modifying the supply circuit of the cylinder, only driving differently the oil supply or discharge.

This task, as well as these and other objects, are achieved by a steering axle for a trailer towed by a tractor, comprising a steering device adapted to control the right and left articulated arms of the steering axle, said steering device comprising a cylinder provided with a right head and a left head, a stem the right and left ends of which are connected to the right and left arms and are slidable along the axis of the cylinder, said stem having a centred position with respect to the cylinder and off-centred positions, a central piston solidly constrained to the stem slidingly engaged with the inner wall of the cylinder and separating a right chamber of the variable volume cylinder and a left chamber of the variable volume cylinder, a right port for supplying fluid to the right chamber of the cylinder, a left port for supplying fluid to the left chamber of the cylinder, a pressurized fluid distributor of pressurized fluid to the right and left chambers of the cylinder, characterized in that said steering device further comprises a right piston passing through said right head and sliding along the axis of the stem, a right intercepting element solidly constrained to the stem, configured and arranged to take up the movement from the right piston to recentre the stem when the stem is off-centred to the left, a left piston passing through said left head and sliding along the axis of the stem, and a left intercepting element solidly constrained to the stem, configured and arranged to take up the movement from the left piston to recentre the stem when the stem is off-centred to the right.

In one embodiment of the invention said right and left intercepting elements are positioned outside the cylinder.

In one embodiment of the invention, said right and left intercepting elements are present respectively at the right and left ends of said stem.

In one embodiment of the invention said right and left intercepting elements are formed by flanges of the right and left ends, respectively, of said stem.

According to the invention, said right chamber is bounded by said right recentring piston, said right head and said central piston, said left chamber being bounded by said left recentring piston, said left head and said central piston.

In one embodiment of the invention, said steering device has a function of restoring and locking the alignment of the axle on the centre.

In one embodiment of the invention said steering device has an active steering function.

In one embodiment of the invention said steering device has a free steering function.

In one embodiment of the invention, said steering axle has a function of assisting realignment of the axle in the centre in which said distributor supplies both said right and left chambers with a fluid pressure lower than the pressure necessary for locking the axle on the centre.

In one embodiment of the invention, said fluid pressure below the pressure necessary for locking the axis in the centre is adjustable.

In one embodiment of the invention, said steering device comprises a switch of the distributor that is drivable automatically or by the operator to select the function of the steering device without disconnecting a source of fluid from the distributor.

In one embodiment of the invention, said respectively right and left pistons have protraction and retraction limit switches adapted to interfere with the inner and outer faces, respectively, of said right and left heads, respectively.

These characteristics and advantages of the invention shall appear more clearly from the following indicative and non-limiting description of preferred but not exclusive embodiments of a steering axle for a trailer towed by a tractor illustrated in the following figures in which:

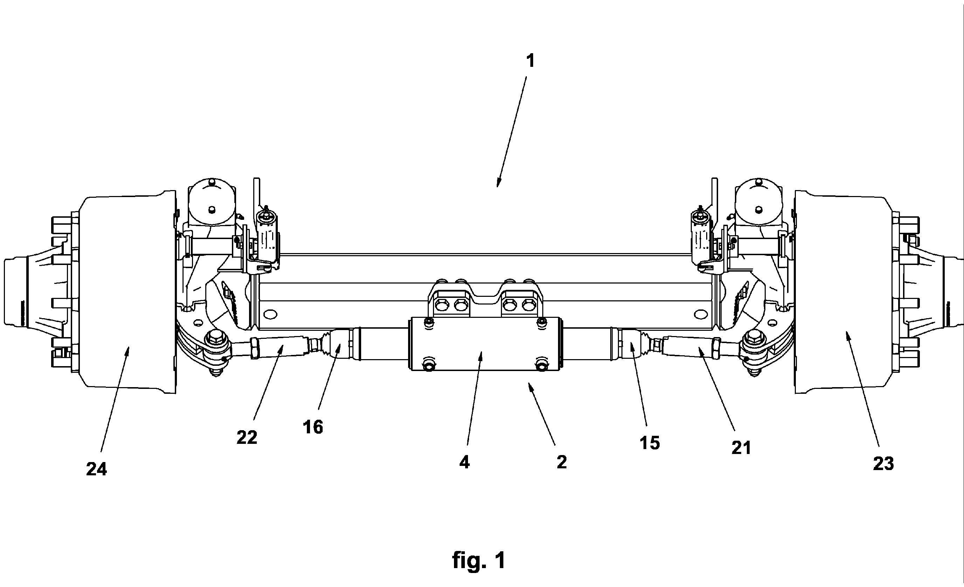

fig. 1 is a front view of the steering axle for a trailer towed by a tractor according to the invention, with a steering device with the function of locking the axle on the centre;

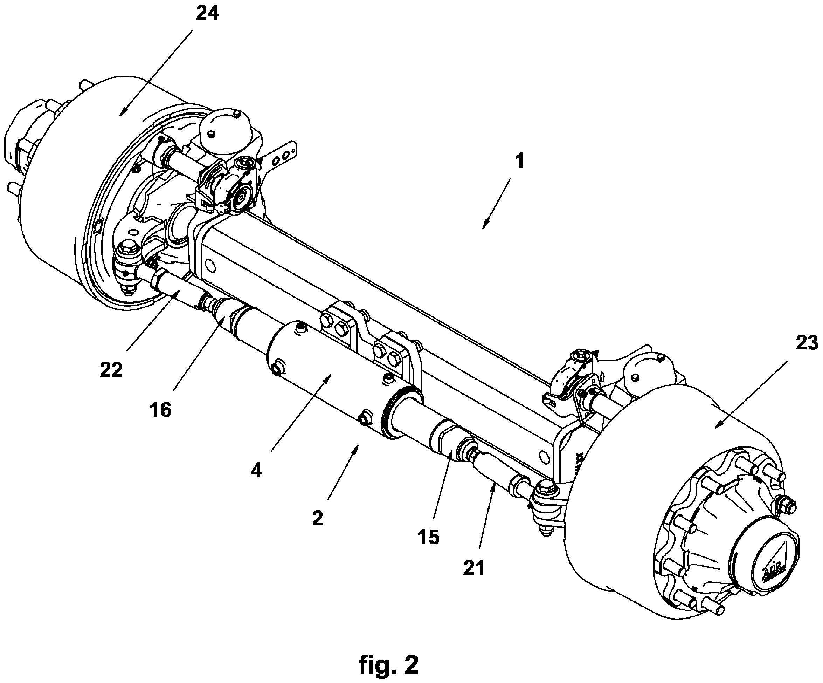

fig. 2 is a perspective view of the steering axle of figure 1, with a steering device with the function of locking the axle on the centre;

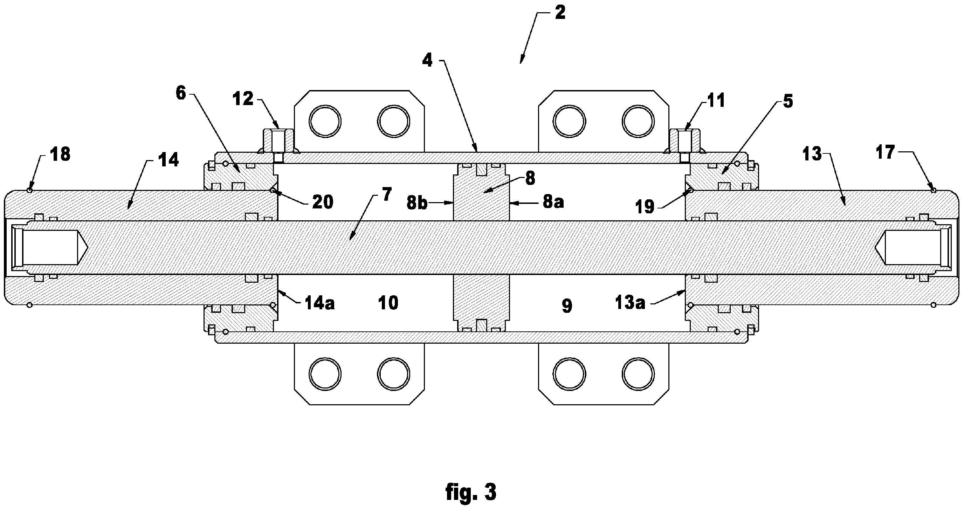

fig. 3 is a section view of the cylinder of the steering axle of figure 1, with a steering device with the function of locking the axle on the centre;

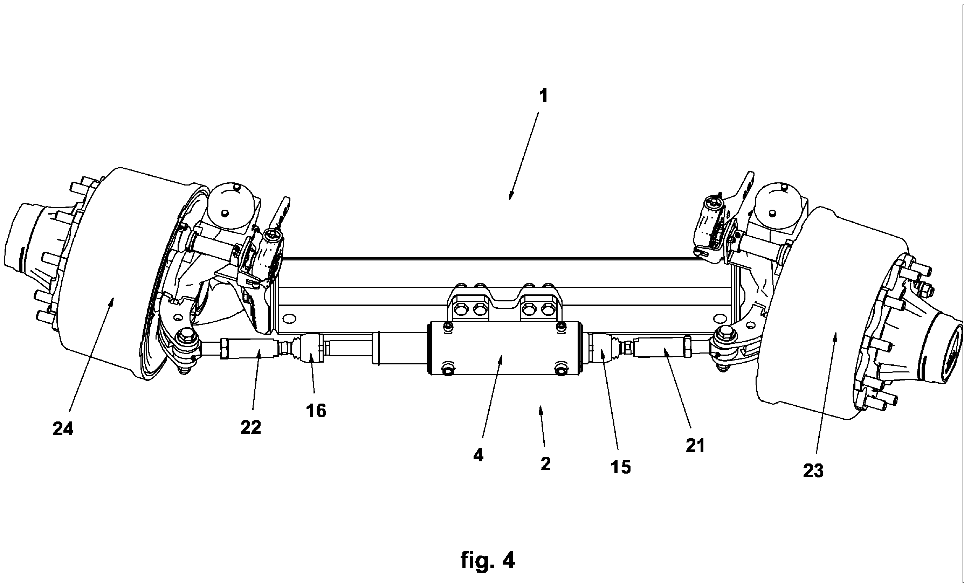

fig. 4 is a front view of the steering axle of figure 1, with the steering device in maximum left steering condition;

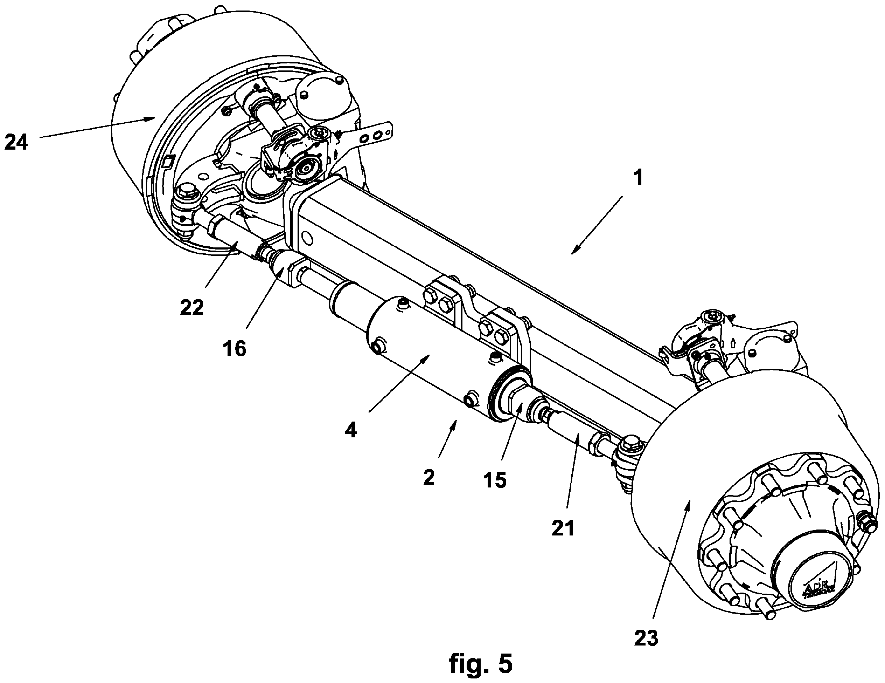

fig. 5 is a perspective view of the steering axle of figure 1, with the steering device in maximum left steering condition;

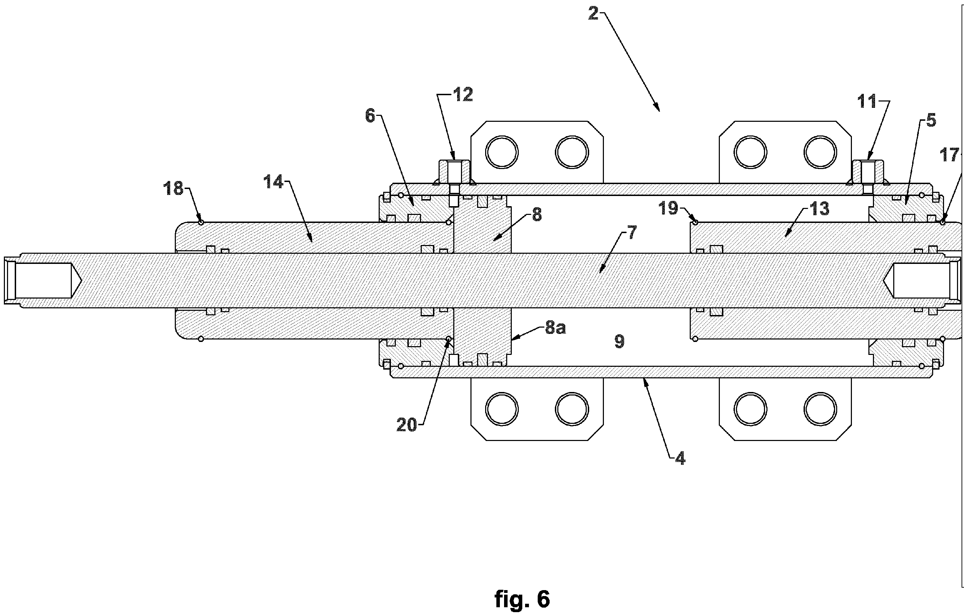

fig. 6 is a section view of the cylinder of the steering axle of figure 1, con steering device in maximum left steering condition; and

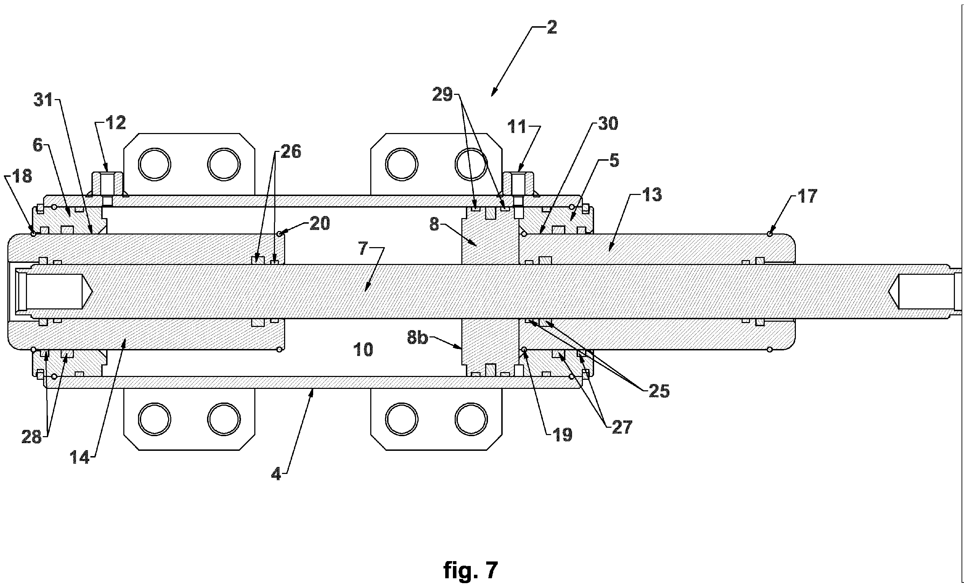

fig. 7 is a section view of the cylinder of the steering axle of figure 1, con steering device in maximum right steering condition.

With particular reference to the figures described above, the steering axle for a trailer towed by a tractor, not shown, is indicated overall with reference numeral 1.

The steering axle 1 comprises a steering device, indicated overall with reference numeral 2, adapted to control the articulated right and left arms 21, 22 that give rise to the steering of the wheels, not shown, mounted on the right and left hubs 23, 24 of the steering axle 1.

The steering device 2 comprises a cylinder 4 fixed to the axle 1 and provided with a right closing head 5 and a left closing head 6, a stem 7 connected at the right and left ends thereof to the right and left arms 21, 22 and slidable along the axis of the cylinder 4, a central piston 8 solidly constrained to the stem 7 slidingly engaged with the inner wall of the cylinder 4 and separating a right chamber 9 of the variable volume cylinder 4 and a left chamber 10 of the variable volume cylinder 4, a right port 11 for supplying fluid to the right chamber 9 of the cylinder 4, a left port 12 for supplying fluid to the left chamber 10 of the cylinder 4, a distributor (not shown) of pressurized fluid to the right and left chambers 9, 10 of the cylinder 4.

Advantageously, the steering device 2 further comprises a right recentring piston 13 that passes through a hole 30 of the right head 5 and is slidable along the axis of the stem 7, and a left recentring piston 14 that passes through a hole 31 of the left head 6 and is slidable along the axis of the stem 7.

More in detail, the right piston 13 is axially hollow and has a preferably cylindrical outer side wall, joined to the preferably cylindrical side wall of the hole 30 of the right head 5, and a preferably cylindrical inner side wall, joined to the preferably cylindrical side wall of the stem 7.

Similarly, the left piston 14 is axially hollow and has a preferably cylindrical outer side wall, joined to the preferably cylindrical side wall of the hole 31 of the left head 6, and a preferably cylindrical inner side wall, joined to the preferably cylindrical side wall of the stem 7.

In one of the possible embodiments of the invention, the right and left pistons 13,14 in particular can be identical.

The right and left heads 5, 6 thus slidingly support the respective right and left pistons 13,14, which in turn slidingly support the stem 7.

The right and left pistons 13, 14 have suitable fluid-tight gaskets 25, 26 at the interface with the stem 7.

Also the right and left heads 5, 6 have suitable fluid-tight gaskets 27, 28 at the interface with the right and left pistons 13, 14.

In one of the possible embodiments, the central piston 8 is positioned at the same distance from ends of the stem 7 and has suitable fluid-tight gaskets 29 at the interface with the inner wall of the cylinder 4.

According to the invention the right chamber 9 is bounded by the right piston 13, the right head 5 and the central piston 8, and of course by the inner wall of the cylinder 4.

According to the invention the left chamber 10 is bounded by the left piston 14, the left head 6 and central piston 8 and of course by the inner wall of the cylinder 4.

The right and left pistons 13, 14 respectively, have protraction 19, 20 and retraction 17, 18 limit switches adapted to interfere with the inner and outer faces, respectively, of the right 5 and left 6 heads, respectively.

The limit switches 17, 18, 19 and 20, in the case illustrated only by way of example, comprise rings fitted in perimeter grooves of the outer wall of the right and left pistons 13, 14 and protruding radially outside the outer wall of the right and left pistons 13, 14.

Advantageously, the steering device 2 has a right intercepting element 15 solidly constrained to the stem 7, configured and arranged to take up the movement from the right piston 13 to recentre the stem 7 when the stem 7 is off-centred to the left, and a left intercepting element 16 solidly constrained to the stem 7, configured and arranged to take up the movement from the left piston 14 to recentre the stem 7 when the stem 7 is off-centred to the right.

By way of example, the right and left intercepting elements 15, 16 are positioned outside the cylinder 4.

By way of example, the right and left intercepting elements 15, 16 in particular are present at the right and respectively left ends of the stem 7.

By way of example, more precisely, the right and left intercepting elements 15, 16 are formed by flanges of the right and left ends, respectively, of the stem 7.

The steering device 2 has a function for restoring and locking the alignment of the axle 1 on the centre.

Restoration and locking of the alignment of the axle 1 on the centre occurs in the following manner.

The two chambers 9, 10 are supplied with the pressurized fluid.

The pressure of the fluid does not generate any displacement of the central piston 8.

In fact, the central piston 8 has two opposite wet surfaces 8a, 8b that are orthogonal to the sliding direction of the stem 7 of equal extent: accordingly, the pressure of the fluid generates two equal but opposite forces on the central piston 8 that offset one another.

The pressure of the fluid on the other hand generates a displacement of the right and left pistons 13, 14.

In fact, the right and left pistons 13, 14, having only one wet inner surface 13a, 14a that is orthogonal to the sliding direction of the stem 7, and are subjected to a force in a single direction that translates the right and left pistons 13, 14 to the outside of the cylinder 4 until they are locked in a position identified by the engagement of the protraction limit switches 19, 20 with the respective heads 5, 6.

During the translation of the right and left pistons 13, 14, one of the pistons, the right piston if the stem 7 is off-centred to the left or the left piston if the stem 7 is off-centred to the right, impacts the relative intercepting element 15, 16 and pushes it until the stem 7 is recentred.

In the position that is thus reached, the right and left pistons 13, 14 are positioned against the respective intercepting elements, 16.

Locking of the axle 1 can at this point be achieved for example by closing the ports 11 and 12 or by continuing to supply both the right and left chambers 9, 10.

The steering device 2 also has an active steering function.

In the active steering function on the right, the distributor supplies with pressurized fluid selectively the left chamber 10 until the desired steering angle is reached whereas in the active steering function on the left the distributor supplies with pressurized fluid selectively the right chamber 9 until the desired steering angle is reached.

The maximum steering angle occurs when the central piston 8 abuts against one of the heads 13, 14.

It must be noted that when the function of steering to the right is active the intensity of the force to the right is not the equivalent of the product of the value of the pressure of the fluid present in the left chamber 10 and the value of the wet surface 8b of the central piston 8.

In fact, during its movement the stem 7 drags the left piston 14, due the effect of the interference of the left intercepting element 16 with the left piston 14.

The movement to the right of the left piston 14 is opposed by the pressure exerted by the pressurized fluid on the wet surface 14a thereof.

The intensity of the force to the right is thus the equivalent of the product of the value of the pressure of the fluid present in the left chamber 10 and the difference between the value of the wet surface 8b of the central piston 8 and the value of the wet surface 14a of the left piston 14.

When the function of steering to the left is active, only the right chamber 9 is supplied with the pressurized fluid and the considerations that have just been set out apply to the function of steering to the right, with the parts obviously being reversed.

Advantageously, the special construction of the steering device 2 makes it possible to calibrate the recentring force of the stem 7 with respect to the force that determines steering by simply varying the radial dimensions of the right and left pistons 13, 14 with respect to the radial dimensions of the central piston 8 and/or by varying the radial dimension of the stem 7.

The steering device 2 also has a free steering function in which the distributor for example does not supply the right chamber 9 or the left chamber 10 with pressurized fluid or connects the right and left ports 11, 12 directly together.

Advantageously, the steering axle 2 also has a function of assisting realignment of the axle 1 in the centre in which the distributor supplies both the right and left chambers 9, 10 but at a fluid pressure lower than the pressure necessary for restoration and locking of the alignment of the axle 1 at the centre.

In this case, the right and left pistons 13, 14 can oscillate and in turn make oscillate the stem 7 through the effect of the interference with the intercepting elements 15, 16 in such a manner that when entering the curve the steering will be slightly delayed whereas when leaving the curve the realignment of the axis 1 on the centre will be accelerated.

In this case, the reduction of the fluid pressure can be adjustable to calibrate the size of the correction.

Advantageously, with this function, the "winding" effect of the axis 1 is opposed without the need to provide dampers dedicated to the purpose. Advantageously, the steering device 2 comprises a switch of the distributor, which is drivable automatically or also manually by an operator to select the function of the steering device 2 without disconnection of a source of fluid from the distributor.

For example, the switch can be a lever or pushbutton control that pilots valve means provided in the distributor.

The steering axle for a trailer towed by a tractor as it is conceived is susceptible to numerous modifications and variants, all falling within the scope of the appended claims.

Moreover, all details may be replaced with other technically equivalent elements.

In practice, the materials used, as well as the dimensions, can be any according to the needs and the state of the art.

## Claims

1. A steering axle (1) for a trailer towed by a tractor, comprising a steering device (2) adapted to control the right and left articulated arms of the steering axle (1), said steering device (2) comprising a cylinder (4) provided with a right head (5) and a left head (6), a stem (7) the right and left ends of which are connected to the right and left arms and are slidable along the axis of the cylinder (4), said stem (7) having a centred position with respect to the cylinder (4) and off-centred positions, a central piston (8) solidly constrained to the stem (7) a right port (11) for supplying fluid to the right chamber (9) of the cylinder (4), a left port (12) for supplying fluid to the left chamber (10) of the cylinder (4), a pressurized fluid distributor for distributing pressurized fluid to the right and left chambers (9, 10) of the cylinder (4), said steering device (2) further comprising a right piston (13) passing through said right head (5) and sliding along the axis of the stem (7), a right intercepting element (15) solidly constrained to the stem (7), configured and arranged for taking up the movement from the right piston (13) to recentre the stem (7) when the stem (7) is off-centred to the left, a left piston (14) passing through said left head (6) and sliding along the axis of the stem (7), and a left intercepting element (16) solidly constrained to the stem (7), configured and arranged for taking up the movement from the left piston (14) to recentre the stem (7) when the stem (7) is off-centred to the right, **characterized in that** said stem (7) is slidingly engaged with the inner wall of the cylinder (4) and separating a right chamber (9) of the variable volume cylinder (4) and a left chamber (10) of the variable volume cylinder (4), said right chamber (9) being bounded by said right recentring piston (13), said right head (5) and said central piston (8), said left chamber (10) being bounded by said left recentring piston (14), said left head (6) and said central piston (8) .

2. The steering axle according to claim 1, **characterized in that** said right and left intercepting elements (15, 16) are positioned outside the cylinder (4).

3. The steering axle according to the preceding claim, **characterized in that** said right and left intercepting elements (15, 16) are present at the right and left ends, respectively, of said stem (7).

4. The steering axle according to the preceding claim, **characterized in that** said right and left intercepting elements (15, 16) are formed by flanges of the right and left ends, respectively, of said stem (7).

5. The steering axle according to any preceding claim, **characterized in that** said steering device (2) has a function of recentring and locking the alignment of the axle (1) on the centre.

6. The steering axle according to any preceding claim, **characterized in that** said steering device (2) has an active steering function.

7. The steering axle according to any preceding claim, **characterized in that** said steering device (2) has a free steering function.

8. The steering axle according to any preceding claim, **characterized in that** said steering device (2) has a function of assisting realignment of the axle in the centre in which said distributor supplies both said right and left chambers (9, 10) at a fluid pressure lower than the pressure necessary for locking the axle (1) on the centre.

9. The steering axle according to the preceding claim, **characterized in that** said fluid pressure lower than the pressure necessary for locking the axle (1) on the centre is adjustable.

10. The steering axle according to any preceding claim, **characterized in that** said steering device comprises a switch of the distributor that is drivable automatically or by the operator to select the function of the steering device without disconnecting a source of fluid from the distributor.

11. The steering axle according to any preceding claim, **characterized in that** said right and left pistons (13, 14), respectively, have protraction (19, 20) and retraction (17, 18) limit switches adapted to interfere with the inner and outer faces, respectively, of said right (5) and left (6) heads, respectively.

## Patentansprüche

1. Lenkachse (1) für einen von einer Zugmaschine gezogenen Anhänger, umfassend eine Lenkvorrichtung (2), die ausgelegt ist, um den rechten und den linken Gelenkarm der Lenkachse (1) zu steuern, wobei die Lenkvorrichtung (2) einen Zylinder (4) umfasst, der mit einem rechten Kopf (5) und einem linken Kopf (6) und einem Schaft (7) versehen ist, dessen rechtes und linkes Ende mit dem rechten und linken Arm verbunden und entlang der Achse des Zylinders (4) verschiebbar sind, wobei der Schaft (7) eine zentrierte Position gegenüber dem Zylinder (4) sowie exzentrische Positionen aufweist, einen mittigen Kolben (8), der fest mit dem Schaft (7) verbunden ist, einen rechten Anschluss (11) für die Zuführung von Medium zur rechten Kammer (9) des Zylinders (4), einen linken Anschluss (12) für die Zuführung von Medium zur linken Kammer (10) des Zylinders (4), einen Verteiler für mit Druck beaufschlagtes Medium, um mit Druck beaufschlagtes Medium zur rechten und zur linken Kammer (9, 10) des Zylinders (4) zu verteilen, wobei die Lenkvorrichtung (2) zudem einen rechten Kolben (13) umfasst, der durch den rechten Kopf (5) führt und entlang der Achse des Schafts (7) verschoben wird, ein rechtes Auffangelement (15), das fest mit dem Schaft (7) verbunden ist, ausgelegt und angeordnet, um die Bewegung vom rechten Kolben (13) zur erneuten Zentrierung des Schafts (7) aufzunehmen, wenn der Schaft (7) nach links versetzt ist, einen linken Kolben (14), der durch den linken Kopf (6) führt und entlang der Achse des Schafts (7) verschoben wird, und ein linkes Auffangelement (16), das fest mit dem Schaft (7) verbunden und ausgelegt und angeordnet ist, um die Bewegung vom linken Kolben (14) zur erneuten Zentrierung des Schafts (7) aufzunehmen, wenn der Schaft (7) nach rechts versetzt ist, **dadurch gekennzeichnet, dass** der Schafft (7) verschiebbar mit der Innenwand des Zylinders (4) im Eingriff ist und eine rechte Kammer (9) des Zylinders (4) mit variablem Volumen und eine linke Kammer (10) des Zylinders (4) mit variablem Volumen trennt, wobei die rechte Kammer (9) durch den rechten Neuzentrierungskolben (13), den rechten Kopf (5) und den mittigen Kolben (8) begrenzt wird, wobei die linke Kammer (10) durch den linken Neuzentrierungskolben (14), den linken Kopf (6) und den mittigen Kolben (8) begrenzt wird.

2. Lenkachse nach Anspruch 1, **dadurch gekennzeichnet, dass** das rechte und das linke Auffangelement (15, 16) außerhalb des Zylinders (4) positioniert sind.

3. Lenkachse nach dem vorhergehenden Anspruch, **dadurch gekennzeichnet, dass** das rechte und das linke Auffangelement (15, 16) jeweils am rechten bzw. am linken Ende des Schafts (7) bereitgestellt sind.

4. Lenkachse nach dem vorhergehenden Anspruch, **dadurch gekennzeichnet, dass** das rechte und das linke Auffangelement (15, 16) durch Flansche jeweils des rechten bzw. des linken Endes des Schafts (7) geformt sind.

5. Lenkachse nach einem der vorhergehenden Ansprüche, **dadurch gekennzeichnet, dass** die Lenkvorrichtung (2) eine Funktion zum Neuzentrieren und Festspannen der Ausrichtung der Achse (1) in der Mitte aufweist.

6. Lenkachse nach einem der vorhergehenden Ansprüche, **dadurch gekennzeichnet, dass** die Lenkvorrichtung (2) eine aktive Lenkungsfunktion aufweist.

7. Lenkachse nach einem der vorhergehenden Ansprüche, **dadurch gekennzeichnet, dass** die Lenkvorrichtung (2) eine freie Lenkungsfunktion aufweist.

8. Lenkachse nach einem der vorhergehenden Ansprüche, **dadurch gekennzeichnet, dass** die Lenkvorrichtung (2) eine Funktion zum Unterstützen der Neuausrichtung der Achse in der Mitte aufweist, wobei der Verteiler sowohl die rechte als auch die linke Kammer (9, 10) bei einem Mediumdruck versorgt, der geringer ist als der Druck, der zum Festspannen der Achse (1) in der Mitte erforderlich ist.

9. Lenkachse nach dem vorhergehenden Anspruch, **dadurch gekennzeichnet, dass** der Mediumdruck, der geringer ist als der Druck der zum Festspannen der Achse (1) in der Mitte erforderlich ist, regelbar ist.

10. Lenkachse nach einem der vorhergehenden Ansprüche, **dadurch gekennzeichnet, dass** die Lenkvorrichtung einen Schalter des Verteilers umfasst, der automatisch oder durch den Bediener betätigbar ist, um die Funktion der Lenkvorrichtung auszuwählen, ohne eine Mediumquelle vom Verteiler zu trennen.

11. Lenkachse nach einem der vorhergehenden Ansprüche, **dadurch gekennzeichnet, dass** der rechte und der linke Kolben (13, 14) jeweils Grenztaster beim Ausfahren (19, 20) und Einfahren (17, 18) aufweisen, die dazu bestimmt sind, jeweils mit der inneren bzw. der äußeren Seitenfläche jeweils des rechten (5) bzw. des linken (6) Kopfs zu interferieren.

## Revendications

1. Essieu de direction (1) pour une remorque tractée par un tracteur, comprenant un dispositif de direction (2) adapté pour commander les bras articulés droit et gauche de l'essieu directeur (1), ledit dispositif de direction (2) comprenant un cylindre (4) muni d'une tête droite (5) et d'une tête gauche (6), une tige (7) dont les extrémités droite et gauche sont reliées aux bras droit et gauche et peuvent coulisser le long de l'axe du cylindre (4), ladite tige (7) ayant une position centrée par rapport au cylindre (4) et des positions décentrées, un piston central (8) solidement fixé à la tige (7), un orifice droit (11) pour alimenter en fluide la chambre droite (9) du cylindre (4), un orifice gauche (12) pour alimenter en fluide la chambre gauche (10) du cylindre (4), un distributeur de fluide sous pression pour distribuer du fluide sous pression aux chambres droite et gauche (9, 10) du cylindre (4), ledit dispositif de direction (2) comprenant en outre un piston droit (13) passant à travers ladite tête droite (5) et coulissant le long de l'axe de la tige (7), un élément d'interception droit (15) solidaire de la tige (7), configuré et agencé pour reprendre le mouvement du piston droit (13) pour recentrer la tige (7) lorsque la tige (7) est décentrée vers la gauche, un piston gauche (14) passant à travers ladite tête gauche (6) et coulissant selon l'axe de la tige (7), et un élément d'interception gauche (16) solidaire de la tige (7), configuré et agencé pour reprendre le mouvement du piston gauche (14) pour recentrer la tige (7) lorsque la tige (7) est décentrée vers la droite, **caractérisé en ce que** ladite tige (7) est engagée de manière coulissante avec la paroi interne du cylindre (4) et sépare une chambre droite (9) du cylindre à volume variable (4) et une chambre gauche (10) du cylindre à volume variable (4), ladite chambre droite (9) étant délimitée par ledit piston recentrant droit (13), ladite tête droite (5) et ledit piston central (8), ladite chambre gauche (10) étant délimitée par ledit piston recentrant gauche (14), ladite tête gauche (6) et ledit piston central (8) .

2. Essieu de direction selon la revendication 1, **caractérisé en ce que** lesdits éléments d'interception droit et gauche (15, 16) sont positionnés à l'extérieur du cylindre (4).

3. Essieu de direction selon la revendication précédente, **caractérisé en ce que** lesdits éléments d'interception droit et gauche (15, 16) sont présents aux extrémités droite et gauche, respectivement, de ladite tige (7).

4. Essieu de direction selon la revendication précédente, **caractérisé en ce que** lesdits éléments d'interception droit et gauche (15, 16) sont formés par des brides des extrémités droite et gauche, respectivement, de ladite tige (7).

5. Essieu de direction selon l'une quelconque des revendications précédentes, **caractérisé en ce que** ledit dispositif de direction (2) a une fonction de recentrage et de blocage de l'alignement de l'essieu (1) sur le centre.

6. Essieu de direction selon l'une quelconque des revendications précédentes, **caractérisé en ce que** ledit dispositif de direction (2) a une fonction de direction active.

7. Essieu de direction selon l'une quelconque des revendications précédentes, **caractérisé en ce que** ledit dispositif de direction (2) a une fonction de direction libre.

8. Essieu de direction selon l'une quelconque des revendications précédentes, **caractérisé en ce que** ledit dispositif de direction (2) a une fonction d'assistance au réalignement de l'essieu au centre dans lequel ledit distributeur alimente à la fois lesdites chambres droite et gauche (9, 10) à une pression de fluide inférieure à la pression nécessaire pour bloquer l'essieu (1) sur le centre.

9. Essieu de direction selon la revendication précédente, **caractérisé en ce que** ladite pression de fluide inférieure à la pression nécessaire au blocage de l'essieu (1) sur le centre est réglable.

10. Essieu de direction selon l'une quelconque des revendications précédentes, **caractérisé en ce que** ledit dispositif de direction comprend un commutateur du distributeur qui peut être entraîné automatiquement ou par l'opérateur pour sélectionner la fonction du dispositif de direction sans déconnecter une source de fluide du distributeur.

11. Essieu de direction selon l'une quelconque des revendications précédentes, **caractérisé en ce que** lesdits pistons droit et gauche (13, 14), respectivement, ont des interrupteurs de fin de course de protraction (19, 20) et de rétraction (17, 18) adaptés pour interférer avec les faces intérieure et extérieure, respectivement, desdites têtes droite (5) et gauche (6), respectivement.
